# EUROPEAN PATENT SPECIFICATION

(11) **EP 2 700 310 B1**
(45) Date of publication and mention of the grant of the patent: **14.12.2016**
(21) Application number: 13460046.9
(22) Date of filing: 01.07.2013
(51) Int. Cl.: A01N 33/12, A01N 43/653, A01P 3/00, A01P 13/00, B27K 3/00

(54) **Preservatives for protection against fungi and algae and methods of wood protection against fungi and algae using those preservatives**
Konservierungsmittel zum Schutz gegen Pilze und Algen und Verfahren zum Holzschutz gegen Pilze und Algen unter Verwendung dieser Konservierungsmittel
Conservateurs pour la protection contre des champignons et des algues et procédés permettant de protéger le bois contre des champignons et des algues utilisant ces conservateurs

(30) Priority: 01.07.2012 PL 39973612
(43) Date of publication of application: 26.02.2014
(73) Proprietor: Instytut Technologii Drewna, 60-654 Poznan (PL)
(72) Inventor: Zabielska-Matejuk, Jadwiga, 62-002 Suchy Las (PL); Pernak, Juliusz, 60-573 Poznan (PL); Fojutowski, Andrzej, 62-070 Paledzie (PL); KOT, Mariusz, 61-647 Poznan (PL); Stangierska, Anna, 61-290 Poznan (PL); Przybylska, Weronika, 64-330 Opalenica (PL)
(74) Representative: Piatkowska, Elzbieta

(56) References cited:
- EP-A1- 0 533 017
- EP-A1- 2 036 435
- WO-A1-2011/161404
- WO-A2-2005/058238
- PL-A1- 379 415
- Andrzej Fojutowski ET AL: "THE ASSESSMENT OF MECHANICAL PROPERTIES OF WOOD TREATED WITH IONIC LIQUIDS", Drewno. Pr. Nauk. Donies. Komunik., 1 January 2010 (2010-01-01), XP055094714, Retrieved from the Internet: URL:http://yadda.icm.edu.pl/yadda/element/ bwmeta1.element.baztech-article-BAT8-0017- 0027/c/httpwww_bg_utp_edu_plartd20nr20184d rewnovol53nr184a_fojutowskia_noskowiakm_ko ta_kropacza_stangierska.pdf [retrieved on 2014-01-03]
- Iwona Frackowiak ET AL: "APPLICATION OF AMMONIUM IONIC LIQUIDS IN PARTICLEBOARD TECHNOLOGY", Drewno. Pr. Nauk. Donies. Komunik, 1 January 2010 (2010-01-01), XP055094715, Retrieved from the Internet: URL:http://yadda.icm.edu.pl/yadda/element/ bwmeta1.element.dl-catalog-65b07956-fc9a-4 af7-bab4-f12ca4c71780/c/download.pdf [retrieved on 2014-01-03]

## Description

The object of the invention are fungicides and algaecides and methods of wood protection against fungi, in particular fungi causing brown, white and soft rot, and also against filamentous fungi, especially mould fungi, blue stain fungi and algae, as well as a method of wood protection using those preservatives. According to the invention the bioactive substance of the preservatives consists of mixtures of ammonium ionic liquids and tebuconazole or a mixture of tebuconazole and propiconazole. Those preservatives are for protection of wood used indoors and outdoors in 1-4 use class (hazard of biological attack).

It is known that biodegradable quaternary ammonium halids, characterised by hydrophilicity and strong biological activity, are used for protection of wood against fungi, bacteria, algae, viruses, and other microorganisms. Those compounds are used as biocides. Commercial wood preservatives mostly use didecyldimethylammonium chloride and benzalkonium chloride (systematic name: alkyldimethylbenzylammonium chloride), in which alkyl group contains from 8 to 18 carbon atoms, as well as benzalkonium bromide (systematic name: alkyldimethyl-benzylammonium bromide), in which alkyl group contains from 8 to 18 carbon atoms. Those compounds are characterised by surface active properties, which contributes to, inter alia, poor penetration into porous materials - the depth of penetration into wood is 1-2mm due to strong adsorption on the surface of so protected materials.

A consequence of surface protection of wood, as well as other materials, is susceptibility to fungi or algae attack at the places of cracks occurring during useful life of protected wood, especially in conditions of variable humidity. Therefore, effective action of quaternary ammonium halids is limited only to pressure methods. Preservatives based on ammonium halids demonstrate corrosive action towards iron and ferrous alloys, which has a negative influence on metal connectors used for connecting wood impregnated with ammonium halids. A significant limitation to the application of ammonium chlorides is the possibility of release of toxic dioxins from chloride ions during combustion of impregnated wood.

Patent description no. PL 166934 gives information on preservatives for coniferous wood protection against stain fungi, especially blue stain fungi, which contain quaternary ammonium halids with the addition of sodium carbonate. The addition of carbonate inhibits the corrosive action of ammonium halids, but then strongly alkalize environment, which results in increased adsorption of ammonium halid on the wood surface, which limits applications of those preservatives only to brief antiseptic baths in surface impregnation. Those preservatives are not used in impregnation of wood by pressure methods.

The Polish patent descriptions no. P-208336 and P-208335 give information on a method of wood protection with ionic liquids in the form of hydrophobic alkylbenzyldimethylammonium nitrates(V), in which straight-chain alkyl group contains from 6 to 18 carbon atoms, and nitrates(V) dialkyldimethylammonium, their mixtures with hydrophilic compounds in the form of halid ammonium salts. Introduction of halid ammonium salts to the mixtures increases the effectiveness of their protective action, notwithstanding, those compounds are harmful to the environment, in particular in case so protected wood is burnt.

There are known ionic liquid based preservatives and methods for wood protection against blue stain fungi, mould and *Basidiomycetes.* Patent application no. P-393431 reveals application of nitrates(V), whilst patent application no. P-395817 reveals application of nitrates(III) with natural cations. Those preservatives contain ionic liquids containing alkyl substituents, whose mutual proportion corresponds to so-called "coco" mixture obtained from coconut oil. Those compounds are soluble in water and as a result of that they are leached from impregnated wood to the environment, which limits their applications in some cases.

Preservatives of trade names Korasit KS, Korasit TS and Kemwood ACQ 2300 use mixtures of biocides in the form of benzalkonium chloride or didecyldimethylammonium chloride and copper(II) carbonate. Introduction of copper facilitates use of those preservatives for protection of wood in contact with soil. The content of chloride ions has a negative influence on the environment, for combustion of impregnated wood, which is unavoidable in case of fire, causes release of dioxins.

Antiseptic baths of sawnwood are carried out using preservatives containing compounds of fluorine, tolylfluanid, 1,2,4-triazole derivatives, as well as tertiary amine halids and quaternary ammonium halids. The 1,2,4-triazole derivatives that are used are, inter alia, the following: (*RS*)-1-(4-chlorophenyl)-4,4-dimethyl-3-(1,2,4-triazol-1-ylmethyl)pentan-3-ol (tebuconazole), 1-{[2-(2,4-dichlorophenyl)-4-propyl-1,3-dioxolan-2-yl]methyl}-1,2,4-triazol (propiconazole), 1-{[2-(2,4-dichlorophenyl)-4-ethyl-1,3-dioxolan-2-yl]methyl}-1*H-*1,2,-triazol (etaconazole), 1-{[2-(2,4-dichlorophenyl)-1,3-dioxolan-2-yl]methyl}-1*H-*1,2,4-triazol (azaconazole).

1,2,4-triazole derivatives are characterised by high fungitoxicity against fungi that are plant pathogens, as well as lignocellulosic material pathogens, which is why those derivatives serve as pesticides in plant preservatives, and thanks to the high effectiveness against wood-destroying fungi they are also used in wood preservatives. However, due to insolubility in water of 1,2,4-triazole derivatives (tebuconazole, propiconazole) and limited solubility in organic solvents, there is the necessity of adding to antifungal preservatives a large quantity of toxic volatile organic solvents that are unfavourable to the environment. Those preservatives must be used in the form of dispersion. The penetration of 1,2,4-triazole derivatives, which are components of those preservatives, into porous substratum, e.g. wood, is also limited, therefore preservatives are intended for use only in pressure methods.

The description of patent application WO2011/161404 presents a method for the protection of wood and other lignocellulosic materials against the decomposition by copper-tolerant fungi. The method consists in use of wood preservatives consisting of biocidal metal compounds, a 1.2.4-triazole compound and salts containing a didecyldimethyl quaternary ammonium cation. This preservative contains at least three components: namely, a metal compound, especially a copper compound, 1,2,4-triazole and an ammonium salt containing didecyldimethyl quaternary ammonium cation.

Patent application WO 2005/058238 reveals antimicrobial compounds in the form of water microemulsion containing quaternary ammonium salts with chloride, bromide, and saccharinate anion, phenol, and 1,2,4-triazole, inter alia tebuconazole/propiconazole. A characteristic property of such type of compound is its high leach ability from impregnated wood, which is unfavourable in terms of protection durability.

There is also a wood preservative of trade name Tanalith E 3492, containing a mixture of copper(II) compounds and tebuconazole, for use of impregnated wood indoors and outdoors, also in contact with soil. However, due to a very poor penetration in porous materials, e.g. wood, that wood preservative is intended only for industrial impregnation with pressure methods.

The application of wood preservatives Adolit Bauholz TQ and Korasit Bauholz KT 80, containing mixtures of benzalconium chloride, tebuconazole, propiconazole, deltamethrin or cyfluthrin, is limited only to wood utilised outdoors without contact with soil, due to leaching of benzalconium chloride in soil, which is caused by its poor penetration into wood. Use of those wood preservatives is limited only to pressure methods. The poor penetration of 1,2,3-triazole derivatives into wood also causes their emission to soil. Leaching of those compounds and the presence of chloride ions in the preservative's formula has a negative bearing on the environment.

The aim of the invention was to develop preservatives for protection against fungi and algae that would be characterised by good penetration properties and environmentally safe, as well as a method of wood protection using those preservatives.

Unexpectedly, it turned out that the mixtures of ammonium ionic liquids nitrate(V) and nitrate(III) anion of the general formula 1, 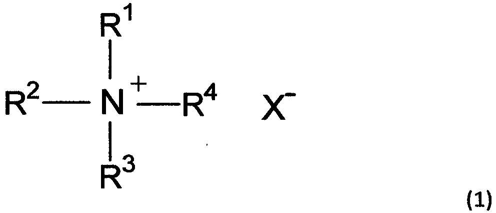 where
- R¹ denotes benzyl, alkyl substituent of a carbon chain length of C₁₋₂₀ or unsaturated hydrocarbon substituent of a carbon chain length of C₃₋₂₀ containing one or several unsaturated bonds,
- R², R³ are equal and denote alkyl substituent of a carbon chain length of C₁₋₁₆ or unsaturated hydrocarbon substituent of a carbon chain length of C₃₋₁₆ containing one or several unsaturated bonds,
- R⁴ denotes alkyl substituent of a carbon chain length of C₁₋₂₀ or unsaturated hydrocarbon substituent of a carbon chain length of C₃₋₂₀ containing one or several unsaturated bonds,
- X denotes nitrate(V) or nitrate(III) anion whilst the proportion of ionic liquid containing nitrate(V) anion to ionic liquid containing nitrate(III) anion ranges from 20:1 to 1:1, favourably from 10:1 to 3:1-and a 1,2,4-triazole derivative, which is (*RS*)-1-(4-chlorophenyl)-4,4-dimethyl-3-(1,2,4-triazol-1-ylmethyl)pentan-3-ol (tebuconazole), or a mixture of tebuconazole and 1-{[2-(2,4-dichlorophenyl)-4-propyl-1,3-dioxolan-2-yl]methyl}-1,2,4-triazol (propiconazole), whilst the proportion of tebuconazole in the mixture with propiconazole is no less than 10%, favourably from 40 to 60%, and the proportion of ionic liquid to 1,2,4-triazole derivative or a mixture of 1,2,4-triazole derivatives ranges from 100:1 to 7:3, favourably from 9:1 to 4:1. In the preservative according to the invention one may use pure ionic liquid of the general formula 1, where R¹, R², R³, R⁴ mean as described above, or their mixture. Pure ionic liquid means a liquid in which there is only one type of R¹, R², R³, R⁴ substituents.

Use of such mixture of ionic liquids is favourable due to inhibition of corrosive action towards steel in case metal connectors are used in wood, which inhibition is obtained through application of an ionic liquid with nitrate(III) anion.

The preservatives according to the invention may additionally contain other components, in particular solvents, dyes, antipyrenes (agents limiting burning), agents against abiotic factors. As solvents one uses organic solvents or mixtures of them and water.

The preservatives according to the invention are obtained through mixing an appropriate ionic liquid or their mixture with the specific 1,2,4-triazole derivatives according to claim 1 1,2,4-triazole derivatives are introduced into fluid ionic liquid and then the components are mixed until 1,2,4-triazole derivatives are dissolved. Depending on the physico-chemical properties of the ionic liquid the process of preparation of the preservative according to the invention is carried out in increased temperature, in which the ionic liquid is fluid. The process may be carried out in temperatures of 15-80°C, favourably in temperatures close to 60°C. To so prepared preservative one may additionally introduce other components, such as antipyrenes, pigments etc.

The preservatives, according to the invention, for protection of coniferous and deciduous wood against fungi and algae, are characterised by very strong properties as regards penetration into wood - up to 1.6 times deeper than known preservatives, the coefficient of leaching from wood is up to 50% lower than that of known ammonium halids. Moreover, those preservatives are characterised by a broad spectrum of activity, whilst the composition remains the same.

The object of the invention is also a method of surface and deep protection of wood, in particular against fungi and algae, consisting in surface or deep impregnation of wood with a mixture of ammonium ionic liquids containing nitrate(V) anion and nitrate(III) anion of the general formula 1, where R¹, R², R³, R⁴ and X mean as described above, and tebuconazole or a mixture of tebuconazole and propiconazole, whilst the proportion of tebuconazole in the mixture with propiconazole is no less than 10%, favourably from 40 to 60%, and the proportion of ionic liquid to 1,2,4-triazole derivative or a mixture of 1,2,4-triazole derivatives ranges from 100:1 to 7:3, favourably from 9:1 to 4:1. In the method according to the invention one may use both the preservative according to the invention containing a mixture of ionic liquids and the specific 1,2,4-triazole derivatives according to claim 1 and the preservative containing additionally other components, such as antipyrenes, dyes, agents against abiotic factors etc.

In the first variant the method according to the invention consists in surface impregnation of wood with the liquid preservative according to the invention, favourably in the form of solution, whilst the preservative is applied in quantities corresponding to the tebuconazole content no less than 3.75 g/m² or the mixture of tebuconazole and propiconazole content no less than 2.25 g/m². In the case of protection against blue stain fungi the preservative is applied in a quantity corresponding to the content of tebuconazole or a mixture of tebuconazole and propiconazole no less than 7.5 g/m². The preservative is applied in the form of fluid ionic liquid with the specific 1,2,4-triazole derivatives according to claim 1 or their solution in an organic solvent, best isopropanol. Moisture content of impregnated wood is not a condition that unconditionally determines carrying out of the process, nonetheless, it is favourable if the impregnation process is carried out on wood of moisture content up to fibre saturation point, favourably air-dry wood of moisture content ranging from 13 to 22% (fibre saturation point approximately 28%). The impregnation process is favourably carried out in the temperatures ranging from 5 to 80°C. In the method according to the invention one may use both the preservative according to the invention containing a mixture of ionic liquids and 1,2,4-triazole derivatives and the preservative containing additionally other components, such as antipyrenes, dyes, agents against abiotic factors etc.

In the second variant the method according to the invention consists in deep protection of wood, in particular against fungi and algae, consisting in impregnation of wood with the liquid preservative according to the invention or its solution, whilst in the case of coniferous wood the preservative is applied in quantities corresponding to the content of tebuconazole or a mixture of tebuconazole and propiconazole no less than 0.111 kg/m³, whereas in the case of deciduous wood a minimum quantity of introduced tebuconazole or a mixture of tebuconazole and propiconazole is 0.255 kg/m³. The process of wood impregnation is carried out using known pressure methods. Impregnation is carried out using water-organic solutions or organic solutions. Moisture content of impregnated wood is not a condition that unconditionally determines carrying out of the process, nonetheless, it is favourable if the impregnation process is carried out on wood of moisture content up to fibre saturation point, favourably air-dry wood of moisture content ranging from 13 to 22% (fibre saturation point approximately 28%). The impregnation process is favourably carried out in the temperatures ranging from 5 to 80°C. In the method according to the invention one may use both the preservative according to the invention containing a mixture of ionic liquids and the specific 1,2,4-triazole derivatives according to claim 1 and the preservative containing additionally other components, such as antipyrenes, dyes, agents against abiotic factors etc.

In the third variant the method of surface protection of wood, in particular against fungi, especially blue stain fungi (blue stain of wood in service), and algae, exposed to contact with metals, consists in a two-stage impregnation process, whilst in the first stage one applies the preservative according to the invention containing ionic liquid with nitrate(V) anion and 1,2,4-triazole derivatives in a quantity corresponding to the content of tebuconazole or a mixture of tebuconazole and propiconazole no less than 7.5 g per m² of wood and then, after conditioning, favourably 24h, in the second stage one applies the preservative according to the invention containing ionic liquid with nitrate(III) anion and 1,2,4-triazole derivatives in a quantity corresponding to the content of tebuconazole or a mixture of tebuconazole and propiconazole no less than 7.5 g per m² of wood. In the method according to the invention one may use both the preservative according to the invention containing a mixture of ionic liquids and the specific 1,2,4-triazole derivatives according to claim 1 and the preservative containing additionally other components, such as antipyrenes, dyes, agents against abiotic factors etc.

It is favourable to introduce into wood preservative auxiliary substances, such as aromatic agents or pigments.

Thanks to application of the solution according to the invention the following effects were achieved:
- a possibility of achieving effective protection against depreciation and degradation of wood using low concentrations of the new preservatives,
- obtainment of protective preservatives penetrating deeply into wood which facilitate utilisation of protected wood in 4 use class, in contact with soil,
- achievement of wood protection against mould fungi and algae,
- a good effect of fixation of the preservatives in wood,
- the preservatives for protection of other materials susceptible to overgrowing with and decay by microorganisms.

The preservatives for protection against fungi and algae that use mixtures of ammonium ionic liquids and the specific 1,2,4-triazole derivatives according to claim 1 and methods of protection of coniferous and deciduous wood with those preservatives are illustrated by the following examples.

The resistance of wood, protected by the preservatives according to the invention, to filamentous fungi (mould fungi) was determined in accordance with ITB Instruction No. 355/98 (1998): Protection of building wood against biological corrosion with use of chemical preservatives. Requirements and testing. Building Research Institute, Typescript, Warsaw: 1-27.

The fungistatic and fungicidal activity of the preservatives as well as their activity against algae was tested using the agar method developed by Wazny and Thornton (Wazny J., Thornton I.D. (1986): Comparative testing of strains of the dry rot fungus Serpula lacrymans (Schum. ex Fr.) S.F. Gray II. The action of some wood preservatives in agar media. Holzforschung. 40: 383-388.), where the following toxic doses were determined: ED50 - effective dose - concentration inhibiting growth of mycelium colony in 50% in relation to the growth on control medium (ppm), ED100 - effective dose - concentration inhibiting growth of mycelium colony (ppm), LD - lethal dose - concentration causing death of mycelium (ppm).

### Example 1

### Preparation of wood preservative.

15g of tebuconazole was added to 85g of an appropriate fluid ionic liquid and mixed at a temperature of 60°C until tebuconazole was completely dissolved in the ionic liquid. The following mixtures of ionic liquids and tebuconazole were obtained:
[DDA][NO₃](15%T) - a mixture of didecyldimethylammonium nitrate(V) and tebuconazole
[DDA][NO₂](15%T) - a mixture of didecyldimethylammonium nitrate(III) and tebuconazole

### Example 2 (Reference example)

### Preparation of wood preservative.

7.5g of tebuconazole and 7.5g of propiconazole was added to 85g of didecyldimethylammonium nitrate(V) and mixed at a temperature of 60°C until tebuconazole and propiconazole were completely dissolved in the ionic liquid. The obtained mixture was marked as [DDA][NO₃](7,5%T+7,5%P).

### Example 3 (Reference example)

### A method of surface protection of coniferous wood.

[DDA][NO₃](15%T) solution, obtained according to example 1 in the amount of 25 g of ionic liquid corresponding to 3.75 g of tebuconazole per 1 m² of wood, was applied at a room temperature on the surface of dried pine wood *Pinus sylvestris* L. and then the protected wood was conditioned. So prepared surface was tested for resistance to fungi.

The surface of so protected wood is fully resistant to overgrowing by *Chaetomium globosum* fungi and a mixture of the following species: *Aspergillus niger, Penicillium funiculosum, Trichoderma viride, Alternaria alternata,* and *Paecilomyces variotii.*

The fungicidal activity of protective preservative [DDA][NO₃](15%T) is: as regards *Sclerophoma pityophila* ED₅₀ = 5 ppm, ED₁₀₀ = 50 ppm and LD =250 ppm; *Trametes versicolor* ED₅₀ =1 ppm, ED₁₀₀ = 25 ppm and LD =50 ppm; *Coniophora puteana* ED₅₀ = 1 ppm, ED₁₀₀= 50 ppm, LD=100 ppm.

### Example 4 (Reference example)

Proceeding as described in example 3 [DDA][NO₂](15%T) preservative was applied.

The fungicidal activity of [DDA][NO₂](15%T) is: as regards *Sclerophoma pityophila* ED₅₀ = 5 ppm, ED₁₀₀ = 10 ppm and LD = 100 ppm; *Trametes versicolor* ED₅₀ = 1 ppm, ED₁₀₀ = 25 ppm and LD =25 ppm; *Coniophora puteana* ED₅₀ = 1 ppm, ED₁₀₀= 50 ppm, LD=100 ppm.

### Example 5 (Reference example)

### xA method of deep protection of wood.

[DDA][NO₃](15%T), obtained according to example 1, was introduced into pine wood *Pinus sylvestris* L. of moisture content of 0% using a vacuum-pressure method at a temperature of 20 ±2°C. [DDA][NO₃](15%T) was introduced in the form of 0.1% water-isopropanol solution in a quantity corresponding to 0.74 kg of preservative per 1 m³, which corresponds to 0.111 kg of tebuconazole per m³ of wood. Then part of the impregnated pine wood was subjected to a 14-day cycle of leaching with deionised water. Fungicidal values and degree of leaching are given in table 1.

### Example 6 (Reference example)

Proceeding as described in example **5** beech wood *Fagus sylvatica* L. was impregnated using a 0.4% solution and a quantity corresponding to 2.6 kg of preservative per m³, which corresponds to 0.39 kg of tebuconazole per m³ of wood. Fungicidal values and degree of leaching are given in table 1.

### Example 7 (Reference example)

Proceeding as described in example **5** [DDA][NO₃](7.5%T+7.5%P), obtained according to example 2, was applied. Fungicidal values and degree of leaching are given in table 1. The fungicidal activity, determined by agar method, of [DDA][NO₃](7.5%T+7.5%P) preservative, based on a mixture of didecyldimethylammonium nitrate(V) and tebuconazole and propiconazole, is: as regards *Sclerophoma pityophila* ED₅₀ =1 ppm, ED₁₀₀ = 10 ppm and LD = 100 ppm; *Trametes versicolor* ED₅₀ = 1 ppm, ED₁₀₀ = 50 ppm and LD =500 ppm; *Coniophora puteana* ED₅₀ = 1 ppm, ED₁₀₀ = 50 ppm and LD = 100 ppm.

### Example 8 (Reference example)

Proceeding as described in example **6** [DDA][NO₃](7.5%T+7.5%P), obtained according to example 2, was applied. Fungicidal values and degree of leaching are given in table 1.

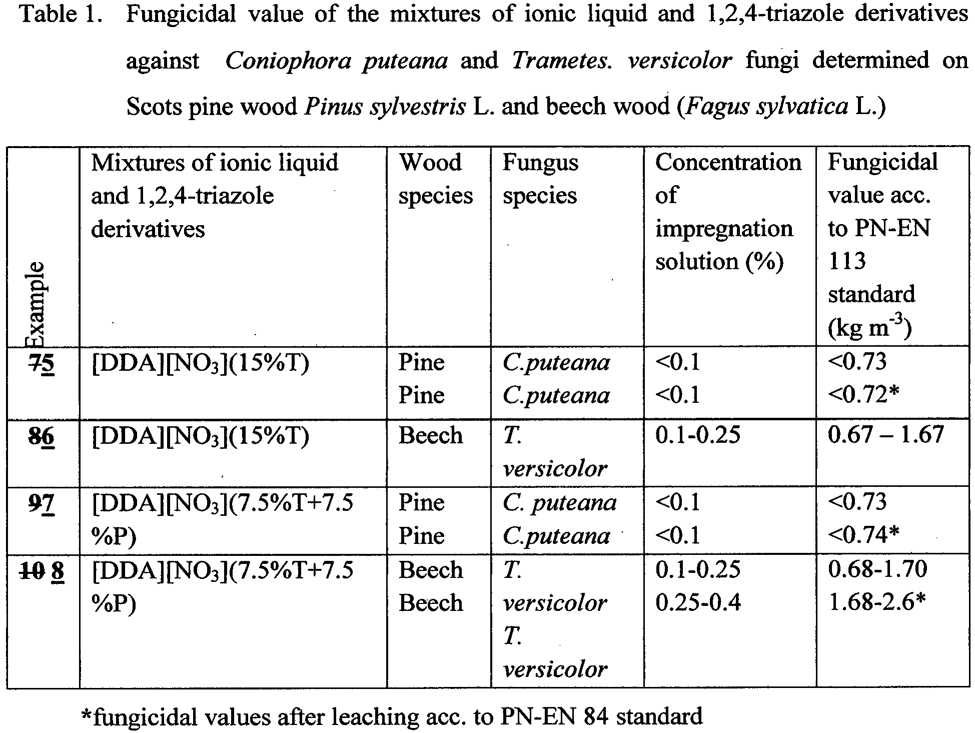

### Example 9

### A method and a preservative for surface protection of wood against secondary blue stain fungi and abiotic factors, containing a mixture of didecyldimethylammonium nitrate(V) and tebuconazole

### 9A base layer

[DDA][NO₃](15%T) in a quantity corresponding to 50 g/m² of wood was applied at a temperature of 20±5°C, using brushing method, as a base layer on Scots pine wood *Pinus sylvestris* L. of moisture content of 12±2%.

### 9B

Then after 24 hours, when the base dried, an isopropanol solution of a mixture of ionic liquid in the form of didecyldimethylammonium nitrate(III) containing 15% of tebuconazole with a 4% addition of yellow pigment in the form of iron oxides was applied, using brushing method, in a quantity corresponding to 50g of a mixture of all components per m² of wood. After conditioning wood protected with the base layer and the mixture of ionic liquid and pigment, exposed outdoors directly to weathering conditions, is resistant to abiotic factors and blue stain-causing fungi *Aureobasidium pullulans* and *Sclerophoma pithyophila,* which is verified by the results given in table 2. The depth of pine wood zone without blue stain, in conditions of intensive infection with spore suspension, is 6.1 to 6.6 mm.

### Example 10

Proceeding as described in example **9** an 8% addition of red pigment in the form of iron oxides was used instead of 4% of yellow pigment. The results of direct exposition to exterior weathering conditions are given in table 2.

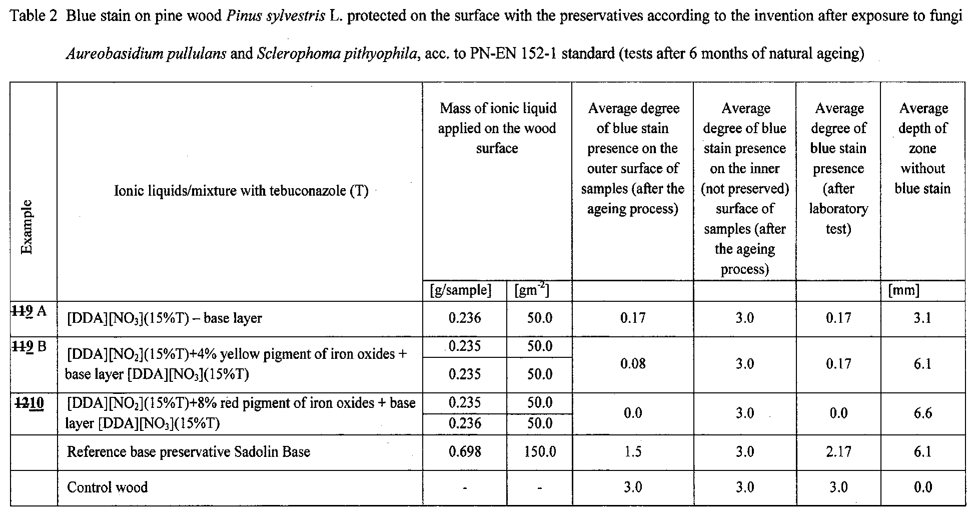

For comparative purposes tests for blue stain on wood protected with the known preservative Sadolin Base and on unprotected wood, as a control sample, were carried out in the same conditions as in example 9 and 10.

Wood protected with the preservatives and using the method described in examples **9** and **10** is also resistant to algae of the following species: *Klebsormidium flaccidum* strain SAG 355-5 and *Chlorococcum vacuolatum* strain CCAP 213/8.

The biocidal activity against algae of [DDA][NO₃](15%T) preservative, based on a mixture of didecyldimethylammonium nitrate(V) and tebuconazole, is: as regards *Klebsormidium flaccidum* ED₁₀₀= 5ppm; *Chlorococcum vacuolatum* ED₁₀₀ = 5-10 ppm..

### Example 11 (Reference example)

### Assessment of penetration

[DDA][NO₃](15%T) in a quantity corresponding to 200g per m² of wood was applied at a temperature of 20±5 °C, using brushing method, on Scots pine wood *Pinus sylvestris* L. of moisture content of 12±2%.

### Example 12 (Reference example)

Proceeding as described in example **11,** a mixture of didecyldimethylammonium nitrate(V), containing 15 weight percent (*m*/*m*) of tebuconazole or 7.5 weight percent (*m*/*m*) of tebuconazole + 7.5 weight percent (*m*/*m*) of propiconazole, with a 0.1% addition of aromatic agents and a 0.5% addition of pigment was applied on the surface of wood using brushing method. Deep penetration into wood at a level of 6.2 mm was achieved, which allows effective protection of coniferous wood against negative effects of light radiation and humidity, as well as the activity of microorganisms, in particular fungi and algae.

Figure 1 depicts the penetration degree of various preservatives in the same conditions.

For comparative purposes a test for penetration of known fungicidal preservatives and a reference preservative NaF was carried out. Particular data in the chart relates to:
1. [DDA][NO₂] - pure ionic liquid
2. [EthC/12][NO₂]- coco[poly(oxyethylene(15)]methylammonium nitrate(III)
3. [Arq 1230][NO₂] - dodecyltrimethylammonium nitrate(III)
4. [DDA][NO3](15%T) - example **11**
5. [DDA][NO₃](7.5%P+7.5%T) - example **12**
6. [DDA][MCPA] - ionic liquid with herbicide anion
7. [DDA][NO₃]-pure ionic liquid
8. 4% NaF

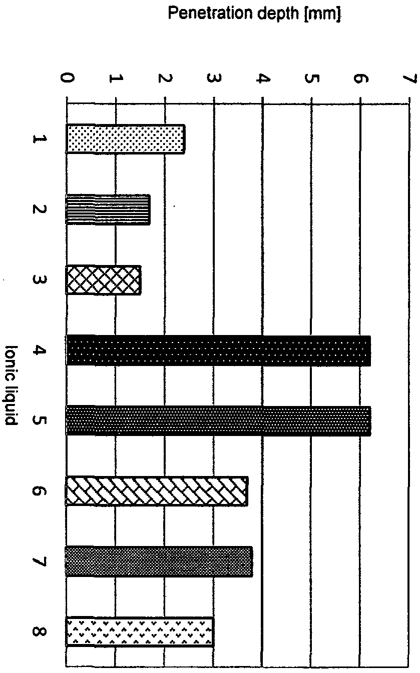

Fig. 1. Penetration depth into Scots pine wood of ionic liquids and mixtures of them and tebuconazole and tebuconazole+propiconazole:
The obtained data unambiguously implies that the mixtures of ionic liquids according to the invention are characterised by significantly better penetration than pure ionic liquids, which results from a decrease (of 17-34 percent) in viscosity of ionic liquids observed on adding tebuconazole or tebuconazole and propiconazole to them.

### Example 13

### A preservative for wood protection against fungi that contains a mixture of didecyldimethylammonium nitrate(V) and didecyldimethylammonium nitrate(III) and tebuconazole

5g of didecyldimethylammonium nitrate(III) and 15g of tebuconazole were added to 80g of didecyldimethylammonium nitrate(V). On mixing at a temperature of 60 °C a liquid of consistency of honey was obtained.

### Example 14

### A preservative for wood protection against fungi that contains a mixture of didecyldimethylammonium nitrate(V) and didecyldimethylammonium nitrate(III) and tebuconazole

10g of didecyldimethylammonium nitrate(III) and 15g of tebuconazole were added to 75g of didecyldimethylammonium nitrate(V). On mixing at a temperature of 60 °C a liquid of consistency of honey was obtained.

### Example 15-18

Plates of cold-pressed carbon steel of metal composition according to PN-87/C-04910 standard were placed for a period of 10 and 20 days in an impregnation water solution of an impregnation preservative of concentration of 1%, which is a permanent dispersion. In order to determine the corrosive aggressiveness of the water solution of the impregnation preservative as regards steel, average velocity of corrosion, dynamics of corrosion, and depth of corrosion was determined after the exposure periods - table 3. Table 3 gives the type of the preservative used and test results.

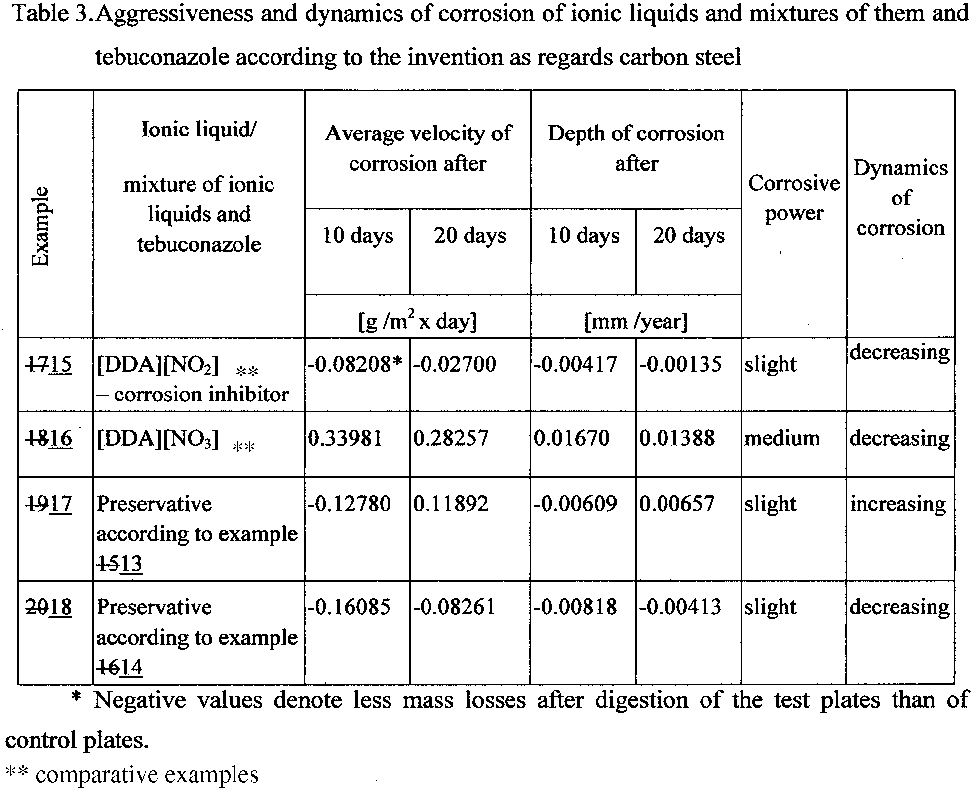

The corrosive aggressiveness of the preservatives according to the invention (examples 13 and 14) in a water solution, tested in accordance with PN-87/C-04910 standard, is slight, despite the presence of nitrate(V) anion in the mixture. After 20 days of exposure in a mixture of ionic liquids and tebuconazole mass losses of steel plates were on average 0.0196 g, average velocity of corrosion was at a level of 0.1189 g/m² x day, and depth of corrosion was 0.00657 mm/year.

### Example 19 (comparative example)

### A preservative containing a mixture of didecyldimethylammonium nitrate(III) and tebuconazole and propiconazole as active substance

7.5% of tebuconazole and 7.5% of propiconazole were added to didecyldimethylammonium nitrate(III) in a quantity of 85 weight percent *(mlm)* warmed up to a temperature of 60°C. The components were mixed until a clear liquid was obtained. On adding 0.5% of pigment in the form of iron oxides and 0.1% of aromatic substances, a preservative in the form of an 80% solution in isopropanol was applied on Scots pine sapwood *Pinus sylvestris* L. of moisture content of 12±2% in a quantity of 15g of a mixture of ionic liquid and tebuconazole and propiconazole per m². Full protection of the wood surface against overgrowing by *Chaetomium globosum* fungus and mixtures of the following fungi species: *Aspergillus niger, Penicillium funiculosum, Trichoderma viride, Alternaria alternata, Paecilomyces variotii,* was achieved.

The fungicidal activity, determined by agar method, of [DDA][NO₂](7.5%T+7.5%P) preservative, based on a mixture of didecyldimethylammonium nitrate(III) and tebuconazole and propiconazole, is: as regards *Sclerophoma pityophila* ED₅₀ =1 ppm, ED₁₀₀ = 10 ppm and LD = 100 ppm; *Trametes versicolor* ED₅₀ <0,1 ppm, ED₁₀₀ = 25 ppm and LD =250 ppm; *Coniophora puteana* ED₅₀ = 1 ppm, ED₁₀₀ = 50 ppm and LD = 100 ppm.

## Claims

1. A preservative for wood protection against fungi and algae, **wherein** the preservative contains a mixture of two types of ammonium ionic liquids, of which one type is nitrate(V) and the other type is nitrate(III), of general formula 1 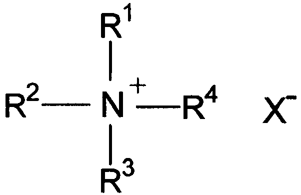 where
- R¹ denotes benzyl or alkyl substituent of a carbon chain length of C₁₋₂₀ or alkyl substituent of a chain length of C₃₋₂₀ containing one or several unsaturated bonds,
- R², R³ are equal and denote alkyl substituent of a carbon chain length of C₁₋₁₆ or alkyl substituent of a chain length of C₃₋₁₆ containing one or several unsaturated bonds,
- R⁴ denotes alkyl substituent of a carbon chain length of C₁₋₂₀ or alkyl substituent of a chain length of C₃₋₂₀ containing one or several unsaturated bonds,
- X denotes nitrate(V) or nitrate(III) anion
whilst the proportion of ionic liquid containing nitrate(V) anion to ionic liquid containing nitrate(III) anion ranges from 20:1 to 1:1, and tebuconazole or a mixture of tebuconazole and propiconazole, whilst the proportion of tebuconazole in the mixture with propiconazole is no less than 10%, whilst the proportion of ionic liquid to tebuconazole or the mixture of tebuconazole and propiconazole ranges from 100:1 to 7:3, alternatively with an addition of solvent.

2. A preservative according to claim 1, **wherein** the proportion of ionic liquid containing nitrate(V) anion to ionic liquid containing nitrate(III) anion ranges from 10:1 to 3:1.

3. A preservative according to claim 1 or 2, **wherein** the proportion of ionic liquid to tebuconazole or a mixture of tebuconazole and propiconazole ranges from 9:1 to 4:1.

4. A preservative according to claim 1 or 2, or 3 **wherein** the mixture of tebuconazole and propiconazole contains 40-60% of tebuconazole.

5. A method of surface protection of wood, in particular for wood protection against fungi, in particular blue stain fungi, against fungi and algae, using ammonium ionic liquids,
**wherein** wood is protected using one of the preservatives, described in claims 1 to 4, in liquid form or in the form of solution in organic solvents or water-organic solvents, whilst the preservative is applied in a quantity no less than a quantity corresponding to the content of tebuconazole 3.75g/m² or the content of a mixture of tebuconazole and propiconazole 2.25g/m².

6. A method according to claim 5, **wherein** in the case of protection against blue stain fungi the preservative is applied in a quantity corresponding to the content of tebuconazole or a mixture of tebuconazole and propiconazole no less than 7.5 g/m².

7. A method of deep protection of wood, in particular for wood protection against fungi and algae, using ammonium ionic liquids and known pressure techniques, **wherein** wood is impregnated with liquid preservative described in any of claims 1 to 4 in liquid form or in the form of solution in organic solvents or water-organic solvents, whilst the preservative is applied in a quantity no less than a quantity corresponding to the content of tebuconazole or a mixture of tebuconazole and propiconazole 0.111 kg /m³.

8. A method according to claim 7, **wherein** in the case of coniferous wood the preservative is applied in a quantity no less than a quantity corresponding to the content of tebuconazole or a mixture of tebuconazole and propiconazole 0.111kg /m³.

9. A method according to claim 7, **wherein** in the case of deciduous wood the preservative is applied in a quantity no less than a quantity corresponding to the content of tebuconazole or a mixture of tebuconazole and propiconazole 0.255kg /m³.

10. A method of surface protection of wood exposed to contact with metals, in particular for wood protection against fungi, in particular blue stain fungi and algae, using ammonium ionic liquids, **wherein** the process consists in two-stage application of two preservatives described in claims 1 to 4, whilst in the first stage one applies a preservative according to the invention containing ionic liquid with nitrate(V) anion and 1,2,4-triazole derivatives in a quantity corresponding to the content of tebuconazole or a mixture of tebuconazole and propiconazole no less than 7.5 g per m² of wood and then, after conditioning, one applies the other preservative according to the invention containing ionic liquid with nitrate(III) anion and 1,2,4-triazole derivatives in a quantity corresponding to the content of tebuconazole or a mixture of tebuconazole and propiconazole no less than 7.5 g per m² of wood.

## Patentansprüche

1. Holzschutzmittel gegen Pilze und Algen, **dadurch gekennzeichnet, dass** es eine Mischung von zwei Arten ionischer Ammoniumflüssigkeiten, von denen eine Nitrat(V) und die andere Nitrat(III) mit der nachfolgenden Formel 1 ist 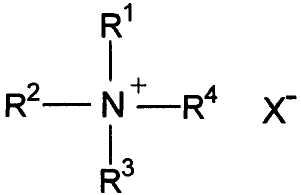 wobei
- R¹ Benzyl oder Alkylsubstuitent mit einer Länge der Kohlenstoffkette von C₁₋₂₀ oder Alkylsubstuitent mit einer Kettenlänge von C₃₋₂₀ mit einer oder mehreren ungesättigten Verbindungen ist,
- R², R³ gleich sind und Alkylsubstuitent mit einer Kettenlänge von C₁₋₁₆ oder Alkylsubstuitent mit einer Kettenlänge von C₃₋₁₆ mit einer oder mehreren ungesättigten Verbindungen darstellen,
- R⁴ Alkylsubstuitent mit einer Kettenlänge von C₁₋₂₀ oder Alkylsubstuitent mit einer Kettenlänge von C₃₋₂₀ mit einer oder mehreren ungesättigten Verbindungen ist,
- X Nitratanion(V) oder Nitratanion(III) ist
wobei das Verhältnis der ionischen Flüssigkeit mit dem Nitratanion(V) zur ionischen Flüssigkeit mit dem Nitratanion(III) von 20:1 bis 1:1 beträgt, sowie Tebuconazol oder eine Mischung von Tebuconazol und Popriconazol, wobei der Anteil von Tebuconazol in der Mischung mit Propiconazol kleiner als 10% ist, wobei das Verhältnis der ionischen Flüssigkeit zum Tebuconazol oder zur Mischung von Tebuconazol und Propiconazol von 100:1 bis 7:3 beträgt, ggf. mit einem Zusatz von Lösungsmittel.

2. Mittel nach Anspruch 1 **dadurch gekennzeichnet, dass** das Verhältnis der ionischen Flüssigkeit mit Nitratanion(V) zur ionischen Flüssigkeit mit Nitratanion(III) von 10:1 bis 3:1 beträgt.

3. Mittel nach Anspruch 1 oder 2 **dadurch gekennzeichnet, dass** das Verhältnis der ionischen Flüssigkeit zum Tebuconazol oder zur Mischung von Tebuconazol und Propiconazol von 9:1 bis 4:1 beträgt.

4. Mittel nach Anspruch 1 oder 2 oder 3 **dadurch gekennzeichnet, dass** die Mischung von Tebuconazol und Propiconazol 40-60 % Tebuconazol enthält.

5. Die Art und Weise des Oberflächenschutzes von Holz gegen Pilze und Algen unter Anwendung ionischer Ammoniumflüssigkeiten **dadurch gekennzeichnet, dass** zum Schutz von Holz eins der unter Ansprüche von 1 bis 4 in flüssiger Form oder in Form einer Lösung in organischen oder wässrig-organischen Lösungsmitteln verwendet wird, wobei die Menge des Mittels nicht kleiner als der Anteil von Tebuconazol 3.75 g/m² oder der Anteil der Mischung von Tebuconazol und Propikonazol 2.25 g/m² ist.

6. Die Art und Weise nach Anspruch 5 **dadurch gekennzeichnet, dass** die Menge des Mittels beim Schutz gegen Verblauugnspilze dem Anteil von Tebuconazol oder der Mischung von Tebuconazol und Propiconazol nicht kleiner als 7.5 g/m² entspricht.

7. Die Art und Weise eines tiefen Holzschutzes, insbesondere zum Holzschutz gegen Pilze und Algen, unter Anwendung ionischer Ammoniumflüssigkeiten sowie bekannter Drucktechniken **dadurch gekennzeichnet, dass** sie in der Sättigung von Holz mit flüssigem Mittel, das unter einem der Ansprüche von 1 bis 4 beschrieben wurde, in flüssiger Form oder in Form einer Lösung in organischen oder wässrig-organischen Lösungsmitteln besteht, wobei die Menge des Mittels nicht kleiner als der Anteil von Tebuconazol oder der Mischung von Tebuconazol oder Propiconazol 0.111 kg/m³ ist.

8. Die Art und Weise nach Anspruch 7, **dadurch gekennzeichnet, dass** beim die Menge des Mittels beim Nadelholz nicht kleiner als der Anteil von von Tebuconazol oder der Mischung von Tebuconazol oder Propiconazol 0.111 kg/m³ ist.

9. Die Art und Weise nach Anspruch 7, **dadurch gekennzeichnet, dass** beim die Menge des Mittels beim Laubholz nicht kleiner als der Anteil von von Tebuconazol oder der Mischung von Tebuconazol oder Propiconazol 0.255 kg/m³ ist.

10. Die Art und Weise des Oberflächenschutzes von Holz, das dem Kontakt mit Metallen ausgesetzt ist, insbesondere zum Holzschutz gegen Pilze, insbesondere gegen Verblauungspilze und Algen, unter Anwendung ionischer Ammoniumflüssigkeiten, **dadurch gekennzeichnet, dass** sie im Auftragen zweier unter Ansprüchen 1 bis 4 beschriebenen Mittel besteht, wobei in der ersten Phase das Mittel gemäß der Erfindung mit der ionischen Flüssigkeit mit Nitratanion(V) und den Derivaten von 1,2,4-Trazol in einer Menge, die dem Anteil von Tebuconazol oder der Mischung von Tebuconazol und Propikonazol nicht kleiner als 7.5 g je m² Holz entspricht, und dann nach dem Auswittern von Holz das zweite Mittel gemäß der Erfindung mit ionischer Flüssigkeit mit Nitratanion(III) sowie Derivaten von 1,2,4-Trazol in einer Menge in einer Menge, die dem Anteil von Tebuconazol oder der Mischung von Tebuconazol und Propikonazol nicht kleiner als 7.5 g je m² Holz entspricht, aufgetragen wird.

## Revendications

1. L'agent pour protéger le bois contre les champignons et les algues **se caractérisant en ce que** l'agent contient le mélange de deux sortes de liquides ioniques d'ammonium dont une est nitrate (V) et l'autre nitrate (III), à la formule générale 1 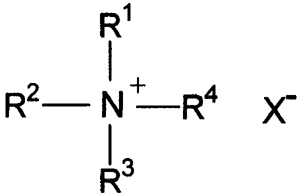 où
- R¹ signifie le benzyle ou le substituant alkyle à la longueur de chaîne de carbone C₁₋₂₀ ou le substituant alkyle à la longueur de chaîne de carbone C₃₋₂₀ comprenant une ou plusieurs liaisons non saturées,
- R², R³ sont égaux et signifient le substituant alkyle à la longueur de chaîne de carbone C₁₋₁₆, ou le substituant alkyle à la longueur de chaîne de carbone C₃₋₁₆ comprenant une ou plusieurs liaisons non saturées,
- R⁴ signifie le substituant alkyle à la longueur de chaîne de carbone C₁₋₂₀ ou le substituant alkyle à la longueur de chaîne de carbone C₃₋₂₀ comprenant une ou plusieurs liaisons non saturées,
- X signifie l'anion nitrate (V) ou nitrate(III)
où le ratio du liquide ionique comprenant l'anion nitrate (V) au liquide ionique comprenant l'anion nitrate (III) est de 20:1 à 1:1, et le tébuconazole ou le mélange de tébuconazole et propiconazole, où la proportion du tébuconazole en mélange avec du propoconazole est inférieure à 10 %, où le ratio du liquide ionique au tébuconazole ou au mélange de tébuconazole et propiconazole est de 100:1 à 7:3, éventuellement avec l'additif du solvant.

2. L'agent selon la revendication 1 **se caractérisant en ce que** le ratio du liquide ionique comprenant l'anion nitrate (V) au liquide ionique comprenant l'anion nitrate (III) est de 10:1 à 3:1.

3. L'agent selon la revendication 1 ou 2 **se caractérisant en ce que** le ratio du liquide ionique au tébuconazole ou au mélange de tébuconazole et propiconazole est de 9:1 à 4:1.

4. L'agent selon la revendication 1 ou 2 ou 3 **se caractérisant en ce que** le mélange de tébuconazole et propiconazole comprend 40-60 % du tébuconazole.

5. Le moyen de protéger superficiellement le bois contre les champignons et les algues, avec l'utilisation des liquides ioniques d'ammonium **se caractérisant en ce que** pour protéger le bois on applique un des agents décrits dans les revendications de 1 à 4 , sous forme liquide ou sous forme de solution dans les solvants organiques ou aqueux-organiques, où l'agent est appliqué en quantité non inférieure à celle qui convient à la teneur en tébuconazole 3.75 g/m² ou à la teneur en mélange de tébuconazole et propiconazole 2.25 g/m².

6. Le moyen selon la revendication 5 **se caractérisant en ce qu'**en cas de la protection contre les champignons de bleuissement l'agent est appliqué en quantité qui convient à la teneur en tébuconazole ou en mélange de tébuconazole et propiconazole pas moins de 7.5 g/m².

7. Le moyen de protéger le bois profondément, et notamment pour la protection contre les champignons et les algues, avec l'utilisation des liquides ioniques d'ammonium et les techniques de la pression connues **se caractérisant en ce qu'**il consiste à imprégner le bois avec l'agent liquide décrit dans n'importe quelle revendiction de 1 à 4 sous forme liquide ou sous forme de solution dans les solvants organiques ou aqueux-organiques, où l'agent est appliqué en quantité non inférieure à celle qui convient à la teneur en tébuconazole ou à la teneur en mélange de tébuconazole et propiconazole 0.111 kg/m³.

8. Le moyen selon la revendication 7 **se caractérisant en ce qu'**en cas des conifères l'agent est appliqué en quantité non inférieure à celle qui convient à la teneur en tébuconazole ou à la teneur en mélange de tébuconazole et propiconazole 0.111 kg/m³.

9. Le moyen selon la revendication 7 **se caractérisant en ce qu'**en cas du bois feuillu l'agent est appliqué en quantité non inférieure à celle qui convient à la teneur en tébuconazole ou à la teneur en mélange de tébuconazole et propiconazole 0.255 kg/m³.

10. Le moyen de protéger superficiellement le bois exposé au contact avec les métaux et notamment pour la protection contre les champignons, et notamment les champignons de bleuissement, et les algues, avec l'utilisation des liquides ioniques d'ammonium **se caractérisant en ce qu'**il consiste à appliquer en deux étapes deux agents décrits dans les revendications de 1 à 4, où premièrement on applique l'agent selon l'invention comprenant le liquide ionique avec l'anion de nitrate (V) et les dérivés de 1,2,4-triazole en quantité qui convient à la teneur en tébuconazole ou à la teneur en mélange de tébuconazole et propiconazole pas moins de 7,5 g par m² du bois et ensuite, après la maturation, on applique l'agent selon l'invention comprenant le liquide ionique avec l'anion de nitrate (III) et les dérivés de 1,2,4-triazole en quantité qui convient à la teneur en tébuconazole ou à la teneur en mélange de tébuconazole et propiconazole pas moins de 7,5 g par m² du bois.
